# EUROPEAN PATENT APPLICATION

(11) **EP 4 080 842 A1**
(43) Date of publication of application: **26.10.2022**
(21) Application number: 20902711.9
(22) Date of filing: 15.12.2020
(51) Int. Cl.: H04L 29/06

(54) **METHOD AND APPARATUS FOR OBTAINING MALICIOUS EVENT INFORMATION, AND ELECTRONIC DEVICE**

(30) Priority: 17.12.2019 CN 201911303171
(71) Applicant: Sangfor Technologies Inc., Shenzhen, Guangdong 518055 (CN)
(72) Inventor: MA, Changchun, Shenzhen, Guangdong 518055 (CN)
(74) Representative: Müller Schupfner & Partner Patent- und Rechtsanwaltspartnerschaft mbB
(86) International application number: PCT/CN2020/136355
(87) International publication number: WO 2021/121199

(57) **Abstract**

A method and apparatus for obtaining malicious event information, an electronic device, and a storage medium. The method comprises: extracting behavior data in a terminal; constructing an event heterogeneous graph according to the behavior data, wherein the edges of the event heterogeneous graph represent behavior events; extracting a malicious event sub-graph from the event heterogeneous graph; and generating tracing information corresponding to the malicious event sub-graph. By automatically extracting the malicious event sub-graph from the constructed event heterogeneous graph and generating the corresponding tracing information, the constructed event heterogeneous graph can intuitively represent a cause and effect relationship between the behavior events, and facilitates tracing analysis, and thus, the malicious event sub-graph extracted according to the event heterogeneous graph can represent the complete procedure of a malicious event, thereby improving the accuracy of obtained tracing information, and also making the tracing information be more similar to the actual condition of the malicious event. The method can be automatically executed, thereby avoiding the manual analysis of a related log, and having higher efficiency.

## Description

This application claims the priority to Chinese Patent Application No. 201911303171.0, titled "METHOD AND APPARATUS FOR OBTAINING MALICIOUS EVENT INFORMATION, AND ELECTRONIC DEVICE", filed on December 17, 2019 with the China National Intellectual Property Administration (CNIPA), which is incorporated herein by reference in its entirety.

### FIELD

The present disclosure relates to the technical field of data processing, and in particular to a method and an apparatus for acquiring malicious event information, an electronic device and a storage medium.

### BACKGROUND

A malicious event is a behavior event beyond an expectation of a user that is executed in a terminal. In general, the malicious event occurs when a hacker invades the terminal through illegal means, such that the terminal executes a relevant behavior event beyond the expectation of the user. A study finds that a malicious event usually does not occur in isolation. Therefore, it is necessary to determine a root cause of the malicious event through traceability analysis on the malicious event, so as to make a corresponding action to protect the terminal.

Currently, the traceability analysis of the malicious event is to manually analyzing relevant logs to acquire traceability information. However, the relevant logs have large amount of data, and manually tracing the source of the malicious event in massive logs is no different from looking for a needle in a haystack, which has low efficiency and cannot ensure the accuracy of the acquired traceability information.

### SUMMARY

**A** method and an apparatus for acquiring malicious event information, an electronic device and a storage medium are provided according to the present disclosure, in which a malicious event sub-graph is automatically extracted and traceability information corresponding to the malicious event sub-graph is generated by constructing an event heterogeneous graph, to improve the accuracy of traceability information and efficiency of acquiring malicious event information.

In order to solve the above technical problem, a method for acquiring malicious event information is provided according to the present disclosure. The method includes: extracting behavior data in a terminal; constructing an event heterogeneous graph based on the behavior data, where an edge in the event heterogeneous graph represents a behavior event; extracting a malicious event sub-graph from the event heterogeneous graph; and generating traceability information corresponding to the malicious event sub-graph.

In an embodiment, the generating traceability information corresponding to the malicious event sub-graph includes: determining whether the malicious event sub-graph is a fully connected graph; generating, in a case that the malicious event sub-graph is the fully connected graph, the traceability information corresponding to the malicious event sub-graph; and dividing the malicious event sub-graph into multiple connected sub-graphs, and generating traceability information corresponding to each of the connected sub-graphs, in a case that the malicious event sub-graph is not the fully connected graph.

In an embodiment, the dividing the malicious event sub-graph into multiple connected sub-graphs, and generating traceability information corresponding to each of the connected sub-graphs includes: dividing the malicious event sub-graph into multiple initial connected sub-graphs; determining a shortest path between any two of the initial connected sub-graphs according to the event heterogeneous graph; determining, for each shortest path, whether the shortest path is less than a predetermined threshold; based on the shortest path less than the predetermined threshold, connecting initial connected sub-graphs corresponding to the shortest path less than the predetermined threshold to form a final connected sub-graph, in a case that the shortest path is less than the predetermined threshold; determining, in a case that the shortest path is greater than or equal to the predetermined threshold, initial connected sub-graphs corresponding to the shortest path greater than or equal to the predetermined threshold as final connected sub-graphs respectively; and generating the traceability information corresponding to each of the final connected sub-graphs.

In an embodiment, the generating traceability information corresponding to the malicious event sub-graph includes: selecting a vertex with a smallest in-degree in the malicious event sub-graph as a starting vertex, traversing the malicious event sub-graph in a depth-first manner, and determining a behavior event acquired in the traversal process as the traceability information.

In an embodiment, the constructing an event heterogeneous graph based on the behavior data includes: classifying, according to a time when a behavior occurs, the behavior data into a corresponding time period; constructing a time-period event heterogeneous graph according to behavior data corresponding to each time period; and combining time-period event heterogeneous graphs corresponding to all time periods to form the event heterogeneous graph.

In an embodiment, the extracting behavior data in a terminal includes: extracting the behavior data in the terminal from a third-party log and an API log.

In an embodiment, the extracting a malicious event sub-graph from the event heterogeneous graph includes: extracting the malicious event sub-graph from the event heterogeneous graph according to a meta path template and a malicious event.

In an embodiment, the extracting the malicious event sub-graph from the event heterogeneous graph according to a meta path template and a malicious event includes: based on an auxiliary edge addition rule, adding an edge of a behavior event corresponding to the auxiliary edge addition rule into the event heterogeneous graph, to form a final event heterogeneous graph; and extracting the malicious event sub-graph from the final event heterogeneous graph according to the meta path template and the malicious event.

**An** apparatus for acquiring malicious event information is further provided according to another aspect of the present disclosure. The apparatus includes:
a data extraction module, configured to extract behavior data in a terminal;
a heterogeneous graph generation module, configured to construct an event heterogeneous graph based on the behavior data, where an edge in the event heterogeneous graph represents a behavior event;
a malicious event sub-graph extraction module, configured to extract a malicious event sub-graph from the event heterogeneous graph; and
a traceability information generation module, configured to generate traceability information corresponding to the malicious event sub-graph.

**An** electronic device is further provided according to another aspect of the present disclosure. The electronic device includes:
a memory, configured to store a computer program; and
a processor, configured to implement, when executing the computer program, the method for acquiring malicious event information as described above.

A storage medium is further provided according to the present disclosure. The storage medium stores computer executable instructions. The computer executable instructions, when being loaded and executed by a processor, implement the method for acquiring malicious event information as described above.

It can be seen from the method that an event heterogeneous graph is constructed based on behavior data extracted in a terminal, a malicious event sub-graph is extracted according to the event heterogeneous graph, and then traceability information corresponding to the malicious event sub-graph is generated. The constructed event heterogeneous graph may combine all the behavior data extracted by the terminal, and thus intuitively show a causal relationship between multiple behavior events, which is conducive to traceability analysis. Furthermore, the malicious event sub-graph extracted according to the event heterogeneous graph may represent a complete process of the malicious event, to improve the accuracy of the acquired traceability information corresponding to the malicious event, so that the acquired traceability information is more in line with the actual situation of the malicious event. Moreover, the acquiring of malicious event information may be automatically performed in the method without manual analysis on the relevant logs, thereby improving the efficiency and avoiding the uncertainty of manual analysis.

Accordingly, an apparatus for acquiring malicious event information, an electronic device and a storage medium are further provided according to the present disclosure, which have the above beneficial effects and are not repeated herein.

### BRIEF DESCRIPTION OF THE DRAWINGS

In order to illustrate technical solutions in embodiments of the present disclosure or in the conventional technology more clearly, the following will briefly introduce drawings used in the description of the embodiments or the conventional technology. It is apparent that the drawings in the following description only show some embodiments of the present disclosure, and other drawings may be obtained by those ordinary skilled in the art based on these drawings without creative efforts.
Figure 1 is a flow chart of a method for acquiring malicious event information according to an embodiment of the present disclosure;
Figure 2 is a flow chart of extracting a malicious event sub-graph according to an embodiment of the present disclosure;
Figure 3 is a flow chart of generating traceability information corresponding to a malicious event sub-graph according to an embodiment of the present disclosure;
Figure 4 is a flow chart of generating traceability information corresponding to each connected sub-graph according to an embodiment of the present disclosure;
Figure 5 is a flow chart of constructing an event heterogeneous graph according to an embodiment of the present disclosure;
Figure 6 is a structural block diagram of an apparatus for acquiring malicious event information according to an embodiment of the present disclosure;
Figure 7 is a structural block diagram of an electronic device according to an embodiment of the present disclosure; and
Figure 8 is a schematic structural diagram of an electronic device according to an embodiment of the present disclosure.

### DETAILED DESCRIPTION

In order to make objects, technical solutions and advantages of the present disclosure clearer, the present disclosure is further described in detail with reference to the drawings and the embodiments hereinafter. It should be understood that the embodiments described herein are only used to explain the present disclosure, rather than to limit the present disclosure. All other embodiments obtained by those skilled in the art based on the embodiments of the present disclosure without any creative work fall within the protection scope of the present disclosure.

Currently, due to defects of protective measures and weak safety awareness of users, malicious events frequently occur. The malicious events may cause various harms to the terminal, for example, data leakage (including leakage of key data, trade secrets, employee information, customer information, and the like) and encryption of terminal data (such as blackmail software). The leakage of these data may cause incalculable losses to users. The encryption of terminal data refers to that data in the terminal is encrypted by hackers and thus the terminal cannot be used, which destroys the availability of the terminal. Moreover, the hackers usually use asymmetric encryption that is difficult to decrypt without a private key. In order to restore the availability of the terminal, users have to pay a large ransom to hackers. In addition, the hackers may control the terminal to become a broiler (which also known as a puppet machine that refers to a machine that can be remotely controlled by hackers) through account explosion and vulnerability exploitation, to make the terminal participate in distributed denial of service attack (DDOS) and other network attacks. Therefore, when a malicious event occurs in the terminal, it is required to determine the root cause of the malicious event, thus to make a corresponding action to protect the terminal.

A study finds that a malicious event usually does not occur in isolation. For example, in the famous Cyber-Kill-Chain, the malicious event is divided into seven stages and all the stages are interrelated with each other. If there is no traceability analysis of the malicious event and no elimination of the malicious event according to a result of the traceability analysis, the malicious event will not be completely killed, resulting in repeated occurrence of the malicious event in the terminal. Therefore, it is necessary to determine a root cause of the malicious event through traceability analysis on the malicious event, so as to make a corresponding action to protect the terminal. Currently, in the conventional technology, the traceability analysis of the malicious event is to manually analyzing relevant logs to acquire traceability information. However, the relevant logs usually have large amount of data, and manually tracing the source of the malicious event in massive logs by security analysts is no different from looking for a needle in a haystack and requires the security analysts to have sufficient relevant knowledge and high professional quality. As a result, the traceability analysis according to the conventional technology has low efficiency but high cost, and cannot ensure the accuracy of the acquired traceability information.

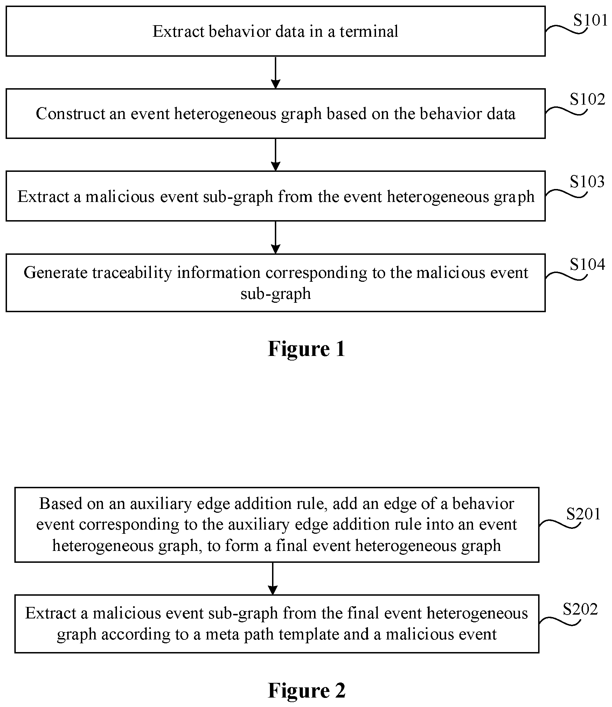

In an embodiment of the present disclosure, an event heterogeneous graph is used to improve accuracy of acquiring malicious event information, so as to solve the above problem. Reference is made to Figure 1, which is a flow chart of a method for acquiring malicious event information according to an embodiment of the present disclosure. The method may include the following steps S101 to S104.

In step S101, behavior data is extracted in a terminal.

According to an embodiment of the present disclosure, the behavior data occurred in the terminal is required to be checked, and then traceability analysis is performed on a malicious event in the terminal to acquire traceability information. In the present disclosure, the traceability information may be understood as malicious event information. Therefore, during a process of acquiring malicious event information in an embodiment of the present disclosure, it is first required to extract the behavior data in the terminal. It should be noted that a source of the behavior data is not limited in the embodiment of the present disclosure. For example, an application programming interface (API) call sequence may serve as the behavior data. Alternatively, relevant data in a third-party log may serve as the behavior data. Alternatively, both the API call sequence and the relevant data in the third-party log may serve as the behavior data to be extracted.

It can be understood that in the embodiment of the present disclosure, the extracted behavior data is analyzed and then an event heterogeneous graph is constructed based on the behavior data. The constructed event heterogeneous graph may combine multiple data sources (that is, combine all the behavior data extracted by the terminal) and intuitively show a causal relationship between multiple behavior events, so as to ensure the accuracy of traceability analysis. Therefore, the more comprehensive the extracted behavior data is, the more accurate the event heterogeneous graph is, and thus the accuracy of traceability information is improved. In order to further improve the accuracy and reliability of acquiring malicious event information, the API call sequence and the relevant data in the third-party log may both serve as the behavior data to be extracted in an embodiment of the present disclosure. Accordingly, a process of extracting the behavior data in the terminal may include: extracting behavior data in the terminal from the third-party log and an API log. A method for acquiring a third-party log and an API log corresponding to the terminal is not limited in the embodiment of the present disclosure, as long as the third-party log and the API log corresponding to the terminal may be acquired according to the method.

In an embodiment of the present disclosure, the behavior data may refer to an underlying behavior activity executed during operation of the terminal, for example, file reading and writing, process creation and process execution. The content of the behavior data is not limited in the embodiment of the present disclosure.

It should be noted that the terminal is not limited in the embodiment of the present disclosure. The terminal may be a device for inputting user information and outputting a processing result. For example, the terminal may be a personal computer, a notebook computer, a mobile phone, a server, or the like.

In step S102, an event heterogeneous graph is constructed based on the behavior data. An edge in the event heterogeneous graph represents a behavior event.

It can be understood that the event heterogeneous graph belongs to a heterogeneous graph (abbreviated as HG). Graph is a term in a graph theory. For example, a graph G may represent a triple (V, E, I), where V represents a vertex set, E represents an edge set, and E is not intersected with V. I represents an association function, and each element in E may be mapped by I. If an edge e is mapped to (u, v), the edge e connects a vertex u to a vertex v, the vertexes u and v are endpoints of the edge e, and the vertex u is adjacent to the vertex v with regard to the edge e. If two edges i, j have a common vertex u, the edge i is adjacent to the edge j with regard to the vertex u. Heterogeneous graph is a term in the graph theory. Generally, in a graph, vertexes have a same type, and edges have a same type. But in practices, a graph has connections between different types. Therefore, based on the graph, auxiliary information is added to each vertex to support different types of vertices and form a heterogeneous graph. The common auxiliary information may include a label (for marking category information), an attribute (for marking detailed attribute information), a vertex property (for marking peculiar attribute of vertex), information propagation (for marking an information propagation path), a knowledge base (for marking additional knowledge about vertex) and the like. In an embodiment of the present disclosure, the event heterogeneous graph may be a digraph or an undirected graph. Both of the digraph and the undirected graph are terms in the graph theory. In a graph, if an edge has directivity, that is, two vertexes of the edge are a source vertex and a destination vertex respectively, and the graph may be referred as a digraph. In a graph, if an edge has no directivity, that is, two vertexes of the edge do not make a distinction between a source vertex and a destination vertex, the graph may be referred as an undirected graph. Whether the constructed event heterogeneous graph is the digraph or the undirected graph is not limited in the embodiment of the present disclosure, and may be determined according to the actual situation of the behavior data. For example, in a case that a behavior event corresponding to the behavior data has directivity, the constructed event heterogeneous graph is a digraph.

It should be noted that the method for constructing an event heterogeneous graph based on the behavior data is not limited in the embodiment of the present disclosure. For example, the behavior data may be traversed and then converted into a form of two vertexes and one edge. If the vertex is already in the vertex set currently, the edge is added into the edge set. If the vertex is not in the vertex set currently, a new vertex is added into the vertex set and the edge is added to the edge set. An edge in the event heterogeneous graph represents a behavior event, and each behavior data may correspond to one behavior event. The constructed event heterogeneous graph may combine all the behavior data extracted by the terminal and intuitively show a causal relationship between multiple behavior events in the terminal, thus to ensure the accuracy of traceability analysis. It can be seen that the more accurate the event heterogeneous graph is, the more accurate the subsequently generated traceability information is.

In step S103, a malicious event sub-graph is extracted from the event heterogeneous graph.

A malicious event also belongs to a behavior event. Therefore, the malicious event also points to a particular behavior event. For different malicious events, a malicious event may point to one or more behavior events. In a case that a malicious event exists in the event heterogeneous graph, the malicious event may be extracted from the event heterogeneous graph to form the malicious event sub-graph. It can be understood that the malicious event sub-graph is a part of the event heterogeneous graph, and is used to represent all behavior events corresponding to the malicious event. In the malicious event sub-graph, each of the behavior events corresponding to the malicious event is formed by an edge corresponding to the behavior event and two vertexes corresponding to the edge.

A method for extracting a malicious event sub-graph from the event heterogeneous graph is not limited in the embodiment of the present disclosure. The user may select a method to extract the malicious event sub-graph according to the actual needs. For example, an edge corresponding to the malicious event and two vertexes associated with the edge may be directly extracted from the event heterogeneous graph to form the malicious event sub-graph. Alternatively, edge(s) of one or more behavior events corresponding to the malicious event may be marked in the event heterogeneous graph to form the malicious event sub-graph. That is, the malicious event sub-graph is acquired by marking the behavior event(s) related to the malicious event. The vertexes of the malicious event sub-graph are a subset of vertexes in the event heterogeneous graph, and the edge set in the malicious event sub-graph is a subset of an edge set in the event heterogeneous graph.

In step S104, traceability information corresponding to the malicious event sub-graph is generated.

In an embodiment of the present disclosure, the malicious event sub-graph contains each behavior event corresponding to the malicious event. That is, the malicious event sub-graph includes an edge of each behavior event corresponding to the malicious event and two vertexes corresponding to the edge. Therefore, the malicious event sub-graph may represent the ins and outs of the entire malicious event, that is, all the behavior events corresponding to the malicious event. Further, the traceability information corresponding to the malicious event may be generated according to the malicious event sub-graph.

A method for generating the traceability information corresponding to the malicious event sub-graph is not limited in the embodiment of the present disclosure. For example, any vertex may be selected as a starting vertex, and all the behavior events corresponding to the malicious event in the malicious event sub-graph are determined as the traceability information. Alternatively, a vertex with a smallest in-degree in the malicious event sub-graph is selected as the starting vertex, and all the behavior events corresponding to the malicious event in the malicious event sub-graph are determined as the traceability information. Alternatively, the vertex with a smallest in-degree in the malicious event sub-graph is selected as the starting vertex, the malicious event sub-graph is traversed in a depth-first manner, and a behavior event acquired in the traversal process is determined as the traceability information. It should be noted that a method for determining all the behavior events corresponding to the malicious event in the malicious event sub-graph as the traceability information is not limited in the embodiment of the present disclosure. For example, all the behavior events corresponding to the malicious event in the malicious event sub-graph are directly added to a specified location to form the traceability information corresponding to the malicious event sub-graph. The method for determining the behavior events acquired in the traversal process as the traceability information is not limited in the embodiment of the present disclosure. For example, the behavior events acquired in the traversal process may be added to the specified location to form the traceability information corresponding to the malicious event sub-graph.

In degree (which may be abbreviated as ID) is the number of edges corresponding to a vertex as a destination vertex in the digraph. The depth-first manner is a traversal method. The implementation of the depth-first manner is not limited in the embodiment of the present disclosure. The depth-first manner may be implemented by: determining a starting vertex v to be visited; starting from unvisited vertices adjacent to the vertex v sequentially and traversing the graph in a depth-first manner, until all vertices each having a path connected to the vertex v in the graph are visited; finally if there is a vertex having not been visited in the graph, re-determining a starting vertex to be visited, starting from the unvisited vertex and re-traversing the graph in a depth-first manner until all vertices in the graph are visited. The specified location and the traceability information are not limited in the embodiment of the present disclosure. For example, the specified location may be a preset template or a pre-created specified folder. The traceability information may be a traceability analysis report acquired by adding the behavior event to the preset template, or a traceability analysis file acquired by adding the behavior event to the pre-created specified folder.

**The** traceability information generated in the embodiment of the present disclosure shows the ins and outs of the malicious event, so as to determine the root cause of the malicious event according to the traceability information. Further, when a malicious event occurs in the terminal, a protective disposal suggestion may be acquired according to the traceability information in an embodiment of the present disclosure, so that the terminal can be protected more timely and reliable. The protective disposal suggestion is not limited in the embodiment of the present disclosure, and is related to the malicious event. The method for acquiring the protective disposal suggestion according to the traceability information is not limited in the embodiment of the present disclosure. For example, the protective disposal suggestion may be directly acquired by a safety officer according to the traceability information. Alternatively, the protective disposal suggestion may be automatically acquired by an electronic device according to the traceability information. Alternatively, upon the terminal receiving the traceability information sent by the electronic device, the protective disposal suggestion may be automatically acquired by the terminal according to the traceability information.

Further, in an embodiment of the present disclosure, in order to make the user timely acquire the traceability information and/or the protective disposal suggestion, the traceability information and/or the protective disposal suggestion may be outputted to the user. A method for outputting the traceability information and/or the protective disposal suggestion is not limited in the embodiment of the present disclosure. For example, the traceability information and/or the protective disposal suggestion may be outputted by an IM system, a mail system, a short message service system, or a log system. Apparently, the traceability information and/or the protective disposal suggestion may be conveyed to the user by a combination of at least two of the above ways.

Based on the above technical solution, a concise and efficient method for acquiring malicious event information is provided according to the embodiment of the present disclosure. In the embodiment, the event heterogeneous graph is introduced as a carrier, the malicious event sub-graph is extracted from the event heterogeneous graph, so as to concisely and intuitively show the ins and outs of the malicious event to the user, and generate the traceability information corresponding to the malicious event sub-graph. The constructed event heterogeneous graph may combine all the behavior data extracted by the terminal, and intuitively show a causal relationship between multiple behavior events, thus which is conducive to traceability analysis. Furthermore, the malicious event sub-graph extracted according to the event heterogeneous graph may represent a complete process of the malicious event, to improve the accuracy of the acquired traceability information corresponding to the malicious event, so that the acquired traceability information is more in line with the actual situation of the malicious event. A potential correlation between events may be found through the event heterogeneous graph, to further improve the accuracy of the traceability result. In addition, the traceability analysis process of the malicious event may be automatically performed in the embodiment without manually analyzing relevant logs, thereby improving the efficiency and avoiding the uncertainty of manual analysis.

Based on the above embodiments, since a malicious event usually does not exist in isolation, when a malicious event that does not exist in isolation is detected in the terminal, the terminal may have other high-risk behavior events related to the malicious event. The high-risk behavior events related to the malicious event may likely to be the malicious event. Alternatively, the high-risk behavior events related to the malicious event may likely to be the root cause of the malicious event. Therefore, in an embodiment of the present disclosure, in order to improve the reliability and accuracy of extracting the malicious event sub-graph from the event heterogeneous graph, the process of extracting the malicious event sub-graph from the event heterogeneous graph may include: extracting the malicious event sub-graph from the event heterogeneous graph according to a meta path template and the malicious event.

It should be noted that in an embodiment of the present disclosure, the meta path template may include multiple meta paths. Each of the meta paths represents multiple behavior events having a correlation. Each behavior event is represented as two vertexes and one edge in the meta path. Each vertex may have a type label of vertex, and the edge may have a type label of edge. The behavior events contained in each of the meta paths in the meta path template all have a correlation, and the correlation may be that the behavior events in the meta path have a sequence of execution, or the behavior events in the meta path has a causal relationship, or the like. The correlation is not limited in the embodiment of the present disclosure, as long as the meta path acquired according to the correlation may represent an entire behavior event chain corresponding to the malicious event that does not exist in isolation. A method for generating a meta path template is not limited in the embodiment of the present disclosure. For example, the meta path template may be generated by a first correlated event knowledge base. The first correlated event knowledge base may be generated according to historical experience. In an embodiment of the present disclosure, the meta path in the meta path template may further be set by the user. The meta path template may be updated regularly to ensure the reliability of the meta path template.

It can be understood that the process of extracting the malicious event sub-graph from the event heterogeneous graph according to the meta path template and the malicious event is not limited in the embodiment of the present disclosure. For example, the malicious even is marked from the event heterogeneous graph, and then it is determined whether an edge adjacent to the malicious event hits a meta path in the meta path template. In a case that the edge has a correlated meta path in the meta path template, other behavior event having a correlation with the malicious event is marked from the event heterogeneous graph by using the correlated meta path of the edge in the meta path template, to form the malicious event sub-graph. Alternatively, the malicious event is marked from the event heterogeneous graph to form an initial malicious event sub-graph, and then it is determined whether the malicious event has an adjacent edge that conforms to a meta path in the meta path template. In a case that the malicious event has an adjacent edge that conforms to a meta path in the meta path template, other behavior event having a correlation with the malicious event is added to the initial malicious event sub-graph by using the meta path corresponding to the adjacent edge, to form the malicious event sub-graph. Alternatively, upon determining the malicious event, it is directly determined whether the adjacent edge of the malicious event hits the meta path in the meta path template. In a case that the edge has a correlated meta path in the meta path template, multiple behavior events corresponding to the malicious event and other behavior event having a correlation with the malicious event are marked from the event heterogeneous graph by using the correlated meta path of the edge in the meta path template, to form the malicious event sub-graph.

Further, in an embodiment of the present disclosure, in order to improve the efficiency of extracting the malicious event sub-graph from the event heterogeneous graph, the initial malicious event sub-graph may be expanded utilizing the meta path template to acquire the malicious event sub-graph. That is, the malicious event is marked from the event heterogeneous graph to form the initial malicious event sub-graph. In a case that the adjacent edge of the malicious event hits the meta path in the meta path template, other behavior event having a correlation with the malicious event is added to the initial malicious event sub-graph by using the hit meta path, to form the malicious event sub-graph.

The above process is illustrated in the following example. If a specified image file and a specified process is a meta path in the meta path template, then the specified image file is marked in the event heterogeneous graph, and the specified process corresponding to the specified image file is a correlated event according to the meta path in the meta path template. If the specified image file is marked as the malicious event in the event heterogeneous graph, but the specified process corresponding to the specified image file is not marked as the malicious event, the specified process corresponding to the specified image file is marked as the malicious event by using the meta path in the meta path template, to form the malicious event sub-graph. Similar to the process of marking the specified process as the malicious event, if a specified process is marked as the malicious event in the event heterogeneous graph but the specified image file corresponding to the specified process is not marked as the malicious event, the specified image file corresponding to the specified process is marked as the malicious event by using the corresponding meta path in the meta path template, to form the malicious event sub-graph.

Based on the above technical solution, the method for acquiring malicious event information is provided according to the embodiment of the present disclosure. In the embodiment, the malicious event sub-graph extracted from the event heterogeneous graph is expanded through the meta path template, so that the extracted malicious event sub-graph is more accurate and can more accurately reflect the ins and outs of the malicious event, thereby improving the accuracy of the acquired traceability information corresponding to the malicious event, and making the traceability information more in line with the actual situation of the malicious event.

Based on the above embodiments, reference is made to Figure 2, which shows a flow chart of extracting a malicious event sub-graph. In an embodiment of the present disclosure, both an auxiliary edge addition rule and a meta path template are used to extract the malicious event sub-graph, so as to further improve the accuracy of the malicious event sub-graph. The method may include the following steps S201 and S202.

In step S201, based on an auxiliary edge addition rule, an edge of a behavior event corresponding to the auxiliary edge addition rule is added into the event heterogeneous graph, to form a final event heterogeneous graph.

Since a malicious event usually does not exist in isolation, if a malicious event that does not exist in isolation is detected in the terminal, the terminal may likely to have other high-risk behavior events related to the malicious event. However, not all the high-risk behavior events related to the malicious event are behavior events obviously having a correlation. In an embodiment of the preset disclosure, for high-risk behavior events that do not have a correlation, the auxiliary edge addition rule is used to add the edge of the behavior event corresponding to the auxiliary edge addition rule to the event heterogeneous graph, to form the final event heterogeneous graph. The edge of the behavior event corresponding to the auxiliary edge addition rule may refer to an edge corresponding to other high-risk behavior events that do not have a correlation in the event heterogeneous graph. That is, through the auxiliary edge addition rule, the final heterogeneous event graph can be more comprehensive and accurate, thereby improving the comprehensiveness and accuracy of extracting the malicious event sub-graph. For example, behavior events corresponding to two entities in the formed event heterogeneous graph generally have other connections, but the event heterogeneous graph does not reflect the other connections that generally exist. In such case, the auxiliary edge addition rule may be used to add an edge of the behavior event corresponding to the auxiliary edge addition rule, so as to reflect other connections among the behavior events corresponding to the two entities. The added edge may be or may not be added with an auxiliary edge identifier. By adding the auxiliary edge identifier, it is more clearly showed in the event heterogeneous graph that which edges are constructed according to the behavior data and which edges are added subsequently.

It should be noted that the method for generating the auxiliary edge addition rule is not limited in the embodiment of the present disclosure. For example, the auxiliary edge addition rule may be generated through a second correlated event knowledge base. The second correlated event knowledge base may be generated according to historical experience. The second correlated event knowledge base may be the same as the first correlated event knowledge base, or the second correlated event knowledge base may be independent from the first correlated event knowledge base. The auxiliary edge addition rule may be set by users. The auxiliary edge addition rule may be updated regularly to ensure the reliability of the auxiliary edge addition rule.

It can be understood that the content of the auxiliary edge addition rule is not limited in the embodiment of the present disclosure. For example, the auxiliary edge addition rule may include: having same portable executable (PE) file signature, being downloaded from a same domain name, having a public parent process, or the like. In an embodiment of the present disclosure, the relationship corresponding to the auxiliary edge addition rule may serve as an edge to be added to the event heterogeneous graph. A process of adding the edge includes: determining different vertexes in the event heterogeneous graph based on the relationship corresponding to the auxiliary edge addition rule, and connecting the different vertexes, to complete the adding of an auxiliary edge. Further, in a case that the relationship corresponding to the auxiliary edge addition rule is bidirectional, two edges may be added to represent the bidirectional relationship.

In step S202, the malicious event sub-graph is extracted from the final event heterogeneous graph according to the meta path template and the malicious event.

In an embodiment of the present disclosure, the malicious event sub-graph is extracted from the final event heterogeneous graph according to the meta path template and the malicious event. The process may refer to the process of extracting the malicious event sub-graph from the event heterogeneous graph according to the meta path template and the malicious event in the above embodiments, which may have a same extraction method but is simply different in the object for extracting malicious event sub-graph.

Based on the above technical solution, a method for acquiring malicious event information is provided according to the embodiment of the present disclosure. In the embodiment, the malicious event sub-graph extracted from the event heterogeneous graph is expanded through the meta path template and the auxiliary edge addition rule, so that the extracted malicious event sub-graph is more accurate and can more accurately reflect the ins and outs of the malicious event, thereby improving the accuracy of the acquired traceability information corresponding to the malicious event, and making the final traceability information more in line with the actual situation of the malicious event.

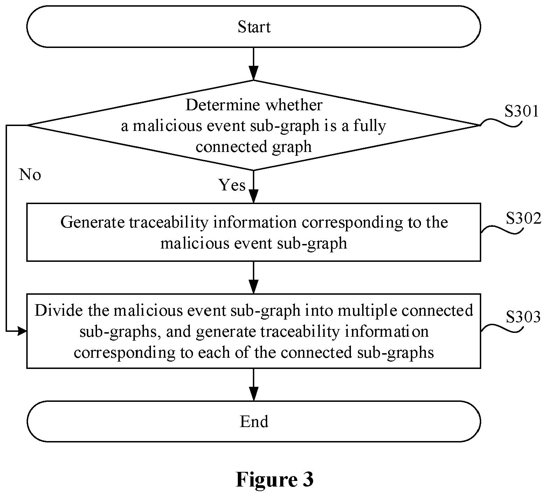

Based on any one of the above embodiments, reference is made to Figure 3, which is a flow chart of generating traceability information corresponding to a malicious event sub-graph according to an embodiment of the present disclosure. The process may include the following steps S301 to S303.

In step S301, it is determined whether the malicious event sub-graph is a fully connected graph. If the malicious event sub-graph is a fully connected graph, proceed to step S302; if the malicious event sub-graph is not a fully connected graph, proceed to step S303.

Connectivity in a graph may represent that there is a path from a start vertex to an end vertex. The connected graph is based on the concept of connectivity. In an undirected graph, if there is a path connecting a vertex i to a vertex j, a graph corresponding to a part of the undirected graph from the vertex i to the vertex j is called as the connected graph. In a digraph, all edges in a path connecting the vertex i to the vertex j are in a same direction. If any two vertexes from the vertex i to the vertex j are connected with each other, a graph corresponding to a part of the digraph from the vertex i to the vertex j is called as the connected graph. If the connected graph is an entire undirected graph or an entire digraph, the connected graph is called as the fully connected graph. If the connected graph is a subset of the entire undirected graph or the entire digraph, the connected graph is called as a connected sub-graph.

In step S302, the traceability information corresponding to the malicious event sub-graph is generated.

In an embodiment of the present disclosure, if the malicious event sub-graph is a fully connected graph, the traceability information may be directly generated according to the entire malicious event sub-graph. The process of generating the traceability information may refer to the contents in step S103 in the above embodiment, which is not repeated herein.

In step S303, the malicious event sub-graph is divided into multiple connected sub-graphs, and traceability information corresponding to each of the connected sub-graphs is generated.

In an embodiment of the present disclosure, if the malicious event sub-graph is not the fully connected graph, the malicious event sub-graph may be divided into different connected sub-graphs based on the connectivity. A method of dividing into the connected sub-graphs is not limited in the embodiment of the present disclosure, as long as the malicious event sub-graph can be divided into the connected sub-graphs. For example, the malicious event sub-graph may be divided into different connected sub-graphs using an adjacent matrix method. Alternatively, the malicious event sub-graph may be divided into different connected sub-graphs using a tree search method. It should be noted that in an embodiment of the present disclosure, in order to further improve the efficiency of dividing into the connected sub-graphs, if the event heterogeneous graph and the malicious event sub-graph are expressed in a manner of digraph, direction information of an edge may be ignored in the process of calculating connectivity, and the malicious event sub-graph is considered as an undirected graph to be processed, to simplify the calculation of connectivity.

It can be understood that the connected sub-graphs in the embodiment of the present disclosure is a subset of the malicious event sub-graph, and also belong to the malicious event sub-graph. Therefore, in an embodiment of the present disclosure, the process of generating the traceability information corresponding to each of the connected sub-graphs may reference to the contents in step S103 in the above embodiment, with replacing the malicious event sub-graph with the connected sub-graph, which is not repeated herein. For example, any one vertex in the connected sub-graph may be selected as a starting vertex, and all the behavior events in the connected sub-graph are determined as the traceability information. Alternatively, a vertex with a smallest in-degree in the connected sub-graph may be selected as a starting vertex, and all the behavior events in the connected sub-graph are determined as the traceability information. Alternatively, a vertex with a smallest in-degree in the connected sub-graph may be selected as a starting vertex, the connected sub-graph is traversed in a depth-first manner, and the behavior events acquired in the traversal process are determined as the traceability information. The above process is performed on each of the divided connected sub-graphs, to generate the traceability information corresponding to each of the connected sub-graphs.

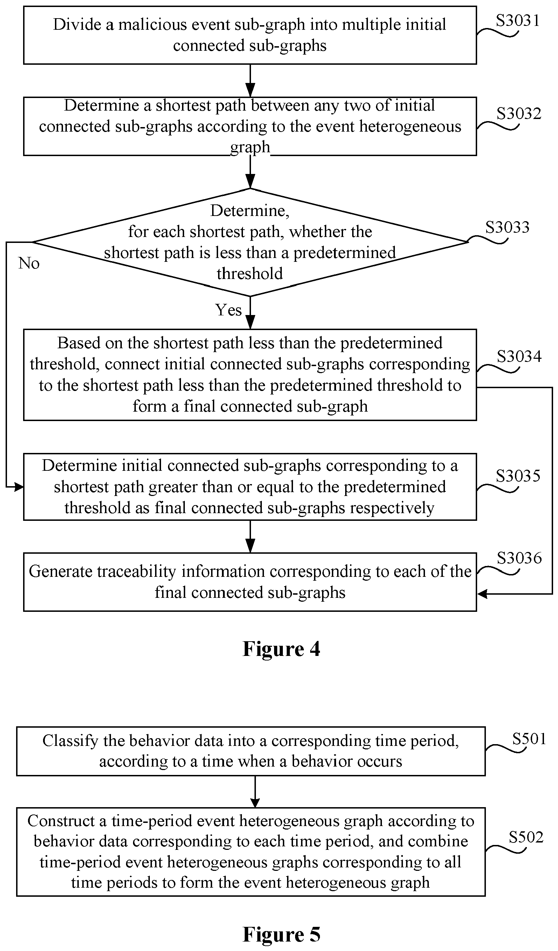

Further, reference may be made to Figure 4. In an embodiment of the present disclosure, dividing the malicious event sub-graph into multiple connected sub-graphs and generating the traceability information corresponding to each of the connected sub-graphs may include the following steps S3031 to S3036.

In step S3031, the malicious event sub-graph is divided into different initial connected sub-graphs.

A process of dividing the malicious event sub-graph into different initial connected sub-graphs may refer to the contents in step S303, which is not repeated herein.

In step S3032, a shortest path between any two of the initial connected sub-graphs is determined according to the event heterogeneous graph.

In an embodiment of the present disclosure, a shortest path between different initial connected sub-graphs may be calculated according to the constructed event heterogeneous graph, and the connectivity of the malicious event sub-graph is increased by the shortest path. The shortest path is to find a shortest path between two vertices in a graph (formed by vertices and edges). A method for determining the shortest path between any two initial connected sub-graphs is not limited in the embodiment of the present disclosure, as long as the shortest path between any two initial connected sub-graphs can be calculated. For example, the shortest path between any two initial connected sub-graphs may be determined according to the event heterogeneous graph through Dijkstra algorithm. Alternatively, the shortest path between any two initial connected sub-graphs may be determined according to the event heterogeneous graph through Floyd algorithm (that is, by means of vertex insertion). Alternatively, the shortest path between any two initial connected sub-graphs may be determined according to the event heterogeneous graph through Bellman-Ford algorithm.

In step S3033, it is determined, for each shortest path, whether the shortest path is less than a predetermined threshold. If the shortest path is less than the predetermined threshold, proceed to step S3034; if the shortest path is greater than or equal to the predetermined threshold, proceed to step S3035.

It should be noted that the value of the predetermined threshold is not limited in the embodiment of the present disclosure, and the predetermined threshold may be set or modified by users according to the actual situation.

In step S3034, based on the shortest path less than the predetermined threshold, initial connected sub-graphs corresponding to the shortest path less than the predetermined threshold are connected to form a final connected sub-graph.

In step S3035, initial connected sub-graphs corresponding to a shortest path greater than or equal to the predetermined threshold are determined as final connected sub-graphs respectively.

In the embodiment of the present disclosure, if there is a shortest path less than the predetermined threshold, two initial connected sub-graphs corresponding to the shortest path less than the predetermined threshold may be connected by the shortest path, that is, the two initial connected sub-graphs may be connected to form a new connected sub-graph as the final connected sub-graph. If there is a shortest path greater than or equal to the predetermined threshold, it indicates that two initial connected sub-graphs corresponding to the shortest path greater than or equal to the predetermined threshold cannot be connected, and thus the two initial connected sub-graphs corresponding to the shortest path greater than or equal to the predetermined threshold may simply be regarded as final connected sub-graphs respectively, that is, they are still two connected sub-graphs.

In step S3036, the traceability information corresponding to each of the final connected sub-graphs is generated.

In the embodiment of the present disclosure, after the above process is performed for the shortest path between any two initial connected sub-graphs, the traceability information corresponding to each of the final connected sub-graphs may be generated. It can be understood that the final connected sub-graphs in the embodiment of the present disclosure is a subset of the malicious event sub-graph, and belong to the malicious event sub-graph. Therefore, in an embodiment of the present disclosure, the process of generating the traceability information corresponding to each of the final connected sub-graphs may reference to the contents in step S103 in the above embodiment, with replacing the malicious event sub-graph with the final connected sub-graph, which is not repeated herein. For example, any one vertex in the final connected sub-graph may be selected as a starting vertex, and all the behavior events in the final connected sub-graph are determined as the traceability information. Alternatively, a vertex with a smallest in-degree in the final connected sub-graph may be selected as a starting vertex, and all the behavior events in the final connected sub-graph are determined as the traceability information. Alternatively, a vertex with a smallest in-degree in the final connected sub-graph may be selected as a starting vertex, the final connected sub-graph is traversed in a depth-first manner, and the behavior events acquired in the traversal process are determined as the traceability information. The above process is performed on each of the final connected sub-graphs, to generate the traceability information corresponding to each of the final connected sub-graphs.

Based on the above technical solution, the method for acquiring the malicious event information is provided according to the embodiment of the present disclosure. In the embodiment, the malicious event sub-graph is divided into different connected sub-graphs and connectivity is increased through the shortest path, so that the generated traceability information is more accurate and more in line with the actual situation of the malicious event.

Based on any of the above embodiments, reference is made to Figure 5, which is a flow chart of constructing an event heterogeneous graph according to an embodiment of the present disclosure. The construction process includes the following steps S501 and S502.

In step S501, the behavior data is classified into a corresponding time period, according to a time when a behavior occurs.

**The** number of time periods is not limited in the embodiment of the present disclosure, which is related to a time range corresponding to the extracted behavior data of the terminal and a length of each of the divided time periods. For example, in a case that the time range corresponding to the extracted behavior data of the terminal is one day and the length of each of the divided time periods is one hour, the number of the time periods is 24. The time range corresponding to the extracted behavior data of the terminal and the length of each of the divided time periods are not limited in the embodiment of the present disclosure, which may be set and modified by the user according to the actual situation.

It should be noted that lengths of the time periods in the embodiment of the present disclosure may be the same or different. In a case that the lengths of the time periods are the same, the time periods may be acquired as follows. The time range corresponding to the extracted behavior data of the terminal is divided into multiple time periods according to a preset length of a time period, for example, the extracted behavior data of the terminal is classified into a corresponding time period through an observation window corresponding to the preset length of time period. The preset length of the time period is not limited in the embodiment of the present disclosure. In a case that lengths of the time periods are different, the time periods may be acquired as follows. The time range corresponding to the extracted behavior data of the terminal is divided into multiple time periods according to preset lengths of the multiple time periods sequentially. A method for setting a preset length of each time period is not limited in the embodiment of the present disclosure. For example, the time range corresponding to the extracted behavior data of the terminal may be divided into an idle time range and a busy time range, then the idle time range may be divided into multiple time periods with a first preset length, and the busy time range may be divided into multiple time periods with a second preset length. The first preset length is greater than the second preset length. A value of the first preset length and a value of the second preset length are not limited in the embodiments of the present disclosure.

In step S502, a time-period event heterogeneous graph is constructed according to behavior data corresponding to each time period. Time-period event heterogeneous graphs corresponding to all time periods are combined to form the event heterogeneous graph.

In an embodiment of the present disclosure, for all the extracted behavior data, a time period to which each behavior data belongs is determined according to a time when a behavior occurs, and the behavior data is classified into a corresponding time period. That is, all the extracted behavior data is classified according to the preset time periods, for each of the time periods, behavior events corresponding to all the extracted behavior data for the time period are combined to generate a time-period event heterogeneous graph corresponding to the time period. Time-period event heterogeneous graphs corresponding to all time periods may be combined to form the event heterogeneous graph. That is, in the embodiment of the present disclosure, the event heterogeneous graph includes the time-period event heterogeneous graphs corresponding to all the time periods. A method for constructing the time-period event heterogeneous graphs corresponding to all the time periods according to the behavior data corresponding to each of the time periods is not limited in the embodiment of the present disclosure. For example, the behavior data may be traversed and converted into a form of two vertices and an edge. If the vertex is already in the vertex set currently, the edge is added into the edge set. If the vertex is not in the vertex set currently, a new vertex is added into the vertex set and the edge is added to the edge set. It can be understood that in the embodiment of the present disclosure, all the extracted behavior data is divided into partial behavior data according to multiple time periods, to avoid a process of constructing the event heterogeneous graph for all the extracted behavior data. That is, the division of the entire behavior data improves the efficiency of constructing the time-period event heterogeneous graphs, thereby improving efficiency of constructing the event heterogeneous graph.

Further, the time periods have a chronological order, and multiple behavior events that occur successively may have a causal relationship. Therefore, the behavior events for the time periods may have a correlation with each other. In an embodiment of the present disclosure, in order to improve the accuracy of the constructed time-period event heterogeneous graph, the time-period event heterogeneous graphs corresponding to the time periods may be successively generated according to the chronological order of the time periods, and during a process of constructing a time-period event heterogeneous graph for a current time period according to behavior data corresponding to the current time period, content corresponding to behavior data related to the current time period for a previous time period is added into the time-period event heterogeneous graph for the current time period. For example, a behavior event corresponding to a first time period has behavior data about constructing a first file, and a behavior event corresponding to a second time period has behavior data about writing first data in the constructed first file. In such case, during a process of constructing a time-period event heterogeneous graph corresponding to the second time period, content about constructing the first file in the first time period is added into the second time period. A method for adding the content corresponding to the behavior data related to the current time period in the previous time period is not limited in the embodiment of the present disclosure. For example, attribute information may be added to a position of the behavior event in the time-period event heterogeneous graph corresponding to the current time period, so as to avoid omitting, in the generated time-period event heterogeneous graph corresponding to the current time period, an effect of the behavior event in the previous time period on the behavior event corresponding to the current time period.

Further, in order to more clearly show the causal relationship between multiple behavior events that occur successively, a time period corresponding to time when a relevant behavior event occurs is further marked in the time-period event heterogeneous graph corresponding to the current time period in an embodiment of the present disclosure. For example, the behavior event corresponding to the first time period has behavior data about constructing the first file, and the behavior event corresponding to the second time period has behavior data about writing first data in the constructed first file. In such case, during the process of constructing the time-period event heterogeneous graph corresponding to the second time period, content about constructing the first file in the first time period is added into the time-period event heterogeneous graph corresponding to the second time period, with marking that the construction of the first file occurs in the first time period.

Based on the above technical solution, the method for acquiring malicious event information is provided according to the embodiment of the present disclosure. In the embodiment, the event heterogeneous graph is formed by constructing the time-period event heterogeneous graph, and all the extracted behavior data is divided into multiple partial behavior data corresponding to multiple time periods, to avoid a process of constructing the event heterogeneous graph for all the extracted behavior data. That is, the efficiency of constructing the time-period event heterogeneous graphs is improved by division of the entire behavior data. A causal relationship between behavior data corresponding to different time periods is added into the time-period event heterogeneous graphs, thus improving the accuracy of constructing the event heterogeneous graph. Furthermore, according to the method for constructing the event heterogeneous graph according to the embodiment of the present disclosure, the accuracy and efficiency of constructing the event heterogeneous graph can be improved.

It should be noted that non-contradictory features in the embodiments of the present disclosure may be combined into a new embodiment, and the present disclosure is not limited to the above embodiments. Execution subjects of the above embodiments are not limited in the embodiments of the present disclosure, which may be an electronic device. The electronic device may be a terminal.

Hereinafter, an apparatus for acquiring malicious event information, an electronic device and a storage medium according to an embodiment of the present disclosure are described. For the apparatus for acquiring malicious event information, the electronic device and the storage medium described below, reference may be made to the method for acquiring malicious event information described above.

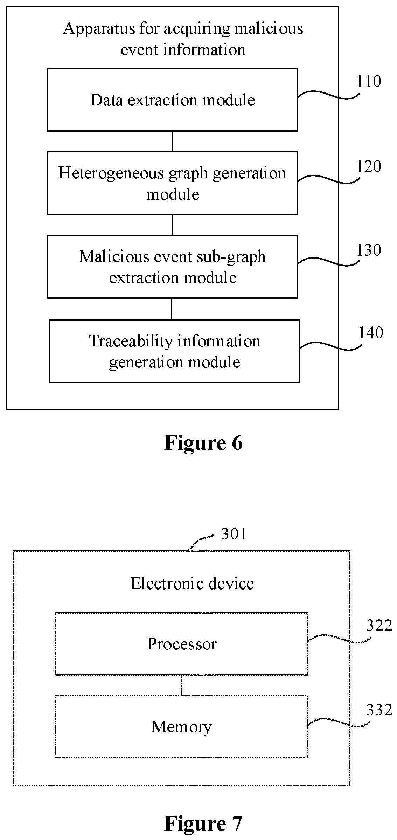

Reference is made to Figure 6, which is a structural block diagram of an apparatus for acquiring malicious event information according to an embodiment of the present disclosure. The apparatus includes a data extraction module 110, a heterogeneous graph generation module 120, a malicious event sub-graph extraction module 130 and a traceability information generation module 140. The data extraction module 110 is configured to extract behavior data in a terminal. The heterogeneous graph generation module 120 is configured to construct an event heterogeneous graph based on the behavior data. An edge in the event heterogeneous graph represents a behavior event. The malicious event sub-graph extraction module 130 is configured to extract a malicious event sub-graph from the event heterogeneous graph. The traceability information generation module 140 is configured to generate traceability information corresponding to the malicious event sub-graph.

Based on the above embodiment, the traceability information generation module 140 may include a first determination unit, a first generation unit and a second generation unit. The first determination unit is configured to determine whether the malicious event sub-graph is a fully connected graph. The first generation unit is configured to generate, in a case that the malicious event sub-graph is the fully connected graph, the traceability information corresponding to the malicious event sub-graph. The second generation unit is configured to divide the malicious event sub-graph into multiple connected sub-graphs, and generate traceability information corresponding to each of the connected sub-graphs, in a case that the malicious event sub-graph is not the fully connected graph.

Based on the above embodiment, the second generation unit may include a division sub-unit, a shortest path determination sub-unit, a determination sub-unit, a final connected sub-graph determination sub-unit and a second generation sub-unit. The division sub-unit is configured to divide the malicious event sub-graph into multiple initial connected sub-graphs. The shortest path determination sub-unit is configured to determine a shortest path between any two of the initial connected sub-graphs according to the event heterogeneous graph. The determination sub-unit is configured to determine, for each shortest path, whether the shortest path is less than a predetermined threshold. The final connected sub-graph determination sub-unit is configured to, based on the shortest path less than the predetermined threshold, connect initial connected sub-graphs corresponding to the shortest path less than the predetermined threshold to form a final connected sub-graph, in a case that the shortest path is less than the predetermined threshold; determine, in a case that the shortest path is greater than or equal to the predetermined threshold, initial connected sub-graphs corresponding to a shortest path greater than or equal to the predetermined threshold as final connected sub-graphs respectively. The second generation sub-unit is configured to generate the traceability information corresponding to each of the final connected sub-graphs.

Based on any one of the above embodiments, the traceability information generation module 140 may include a traceability analysis unit. The traceability analysis unit is configured to select a vertex with a smallest in-degree in the malicious event sub-graph as a starting vertex, traverse the malicious event sub-graph in a depth-first manner, and add a behavior event acquired in the traversal process to a specified location to form the traceability information corresponding to the malicious event sub-graph.

Based on any one of the above embodiments, the heterogeneous graph generation module 120 may include a data classification unit and a heterogeneous graph generation unit. The data classification unit is configured to classify behavior data into a corresponding time period, according to a time when a behavior occurs. The heterogeneous graph generation unit is configured to construct a time-period event heterogeneous graph according to behavior data corresponding to each of the time periods, and combine all the time-period event heterogeneous graphs to form the event heterogeneous graph.

Based on any one of the above embodiments, the data extraction module 110 may include a data extraction unit. The data extraction unit is configured to extract the behavior data in the terminal from a third-party log and an API log.

Based on any one of the above embodiments, the malicious event sub-graph extraction module 130 may include a malicious event sub-graph extraction unit. The malicious event sub-graph extraction unit is configured to extract the malicious event sub-graph from the event heterogeneous graph according to a meta path template and a malicious event.

Based on the above embodiment, the malicious event sub-graph extraction unit may include an auxiliary edge addition sub-unit and a malicious event sub-graph extraction sub-unit. The auxiliary edge addition sub-unit is configured to, based on an auxiliary edge addition rule, add an edge of a behavior event corresponding to the auxiliary edge addition rule into the event heterogeneous graph, to form a final event heterogeneous graph. The malicious event sub-graph extraction sub-unit is configured to extract the malicious event sub-graph from the final event heterogeneous graph according to the meta path template and the malicious event.

It should be noted that, based on any of the above embodiments, the apparatus may be implemented based on a programmable logic device. The programmable logic device includes a FPGA, a CPLD, a Micro Control Unit, a processor or the like. The programmable logic device may be arranged in an electronic device.

Based on the method embodiments described above, an electronic device is further provided according to an embodiment of the present disclosure. As shown in Figure 7, the electronic device may include a memory 332 and a processor 322. The memory 332 is configured to store a computer program. The processor 322 is configured to implement, when executing the computer program, the method for acquiring malicious event information described in the above method embodiments.

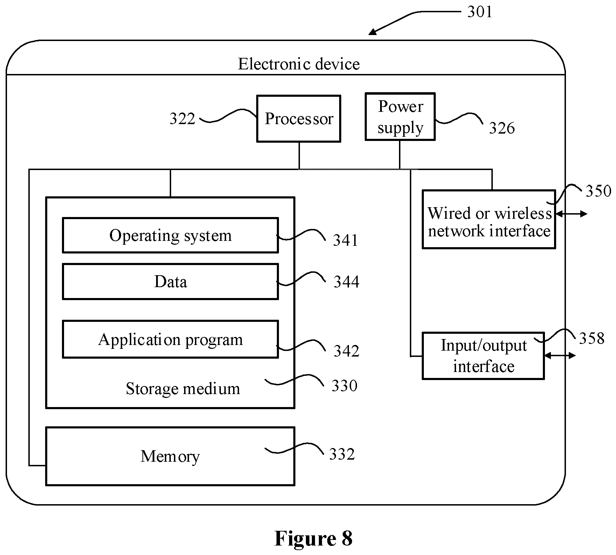

Reference is made to Figure 8, which is a schematic structural diagram of an electronic device according to an embodiment of the present disclosure. The electronic device may vary greatly due to different configurations or performance, and may include one or more central processing units (CPU) 322 (for example, one or more processors) and a memory 332, and one or more storage media 330 (for example, one or more mass storage devices) for storing an application program 342 or data 344. The memory 332 and the storage medium 330 may perform temporary storage or persistent storage. The program stored in the storage medium 330 may include one or more modules (not illustrated in Figure 8), and each module may include a series of instruction operations on a data processing device. Furthermore, the processer 322 may be configured to communicate with the storage medium 330, and perform a series of instruction operations in the storage medium 330 on the electronic device 301.

The electronic device 301 may further include one or more power supplies 326, one or more wired or wireless network interfaces 350, one or more input/output interfaces 358, and/or one or more operating systems 341 (for example, windows ServerTM, Mac OS XTM, UnixTM, LinuxTM, and FreeBSDTM).

The steps in the method for acquiring malicious event information described above may be implemented by the electronic device. The electronic device may be a terminal (such as, a computer, a server or the same), which is not limited in the embodiment of the present disclosure.

Based on the method embodiments described above, a storage medium is further provided according to an embodiment of the present disclosure. The storage medium stores a computer program. The computer program, when being executed by a processor, implements steps in the method for acquiring malicious event information described in the above method embodiments.

The storage medium may include various storage media capable to store a program code, for example, a USB flash disk, a mobile hard disk, a read-only memory (ROM), a random access memory (RAM), a diskette, and a compact disk.

The embodiments in the specification are described in a progressive way, and each embodiment lays emphasis on differences from other embodiments. For the same or similar parts between various embodiments, reference may be made to each other. Since the devices disclosed in the embodiment corresponds to the method disclosed in the embodiment, the description for the device is simple, and reference may be made to the method in the embodiment for the relevant parts.

Those skilled in the art further understand that units and algorithm steps described in combination with the disclosed embodiments may be implemented by electronic hardware, computer software or a combination thereof. In order to clearly describe interchangeability of the hardware and the software, the units and the steps are generally described above based on functions. Whether these functions are performed in hardware or software depends on the specific application and design constraints for the technical solution. For each specific application, those skilled in the art may use a specific method to implement the described function, and such implementation should not be considered as departing from the scope of the present disclosure.

The steps of the method or algorithm described according to the embodiments disclosed herein may be implemented in forms of hardware, a software module executed by a processor or the combination thereof. The software module may be stored in a random access memory (RAM), a memory, a Read-Only memory (ROM), an electrically programmable ROM, an electrically erasable programmable ROM, a register, a hardware disk, a movable magnetic disk, CD-ROM or any other forms of storage medium well known in the art.

The method and apparatus for acquiring malicious event information, the electronic device and the storage medium according to the present disclosure are described in detail above. The principle and the implementation of the present disclosure are illustrated herein by specific examples. The above description of examples is only intended to facilitate the understanding of the method and core idea of the present disclosure. It should be noted that, for those skilled in the art, various modifications and improvements may be made to the present disclosure without departing from the principle of the present disclosure, and these modifications and improvements should fall within the scope of protection of the claims of the present disclosure.

## Claims

1. A method for acquiring malicious event information, comprising:
extracting behavior data in a terminal;
constructing an event heterogeneous graph based on the behavior data, wherein an edge in the event heterogeneous graph represents a behavior event;
extracting a malicious event sub-graph from the event heterogeneous graph; and
generating traceability information corresponding to the malicious event sub-graph.

2. The method for acquiring malicious event information according to claim 1, wherein the generating traceability information corresponding to the malicious event sub-graph comprises:
determining whether the malicious event sub-graph is a fully connected graph;
generating, in a case that the malicious event sub-graph is the fully connected graph, the traceability information corresponding to the malicious event sub-graph; and
dividing the malicious event sub-graph into a plurality of connected sub-graphs, and generating traceability information corresponding to each of the connected sub-graphs, in a case that the malicious event sub-graph is not the fully connected graph.

3. The method for acquiring malicious event information according to claim 2, wherein the dividing the malicious event sub-graph into a plurality of connected sub-graphs, and generating traceability information corresponding to each of the connected sub-graphs comprises:
dividing the malicious event sub-graph into a plurality of initial connected sub-graphs;
determining a shortest path between any two of the initial connected sub-graphs according to the event heterogeneous graph;
determining, for each shortest path, whether the shortest path is less than a predetermined threshold;
based on the shortest path less than the predetermined threshold, connecting initial connected sub-graphs corresponding to the shortest path less than the predetermined threshold to form a final connected sub-graph, in a case that the shortest path is less than the predetermined threshold;
determining initial connected sub-graphs corresponding to a shortest path greater than or equal to the predetermined threshold as final connected sub-graphs respectively, in a case that the shortest path is greater than or equal to the predetermined threshold; and
generating traceability information corresponding to each of the final connected sub-graphs.

4. The method for acquiring malicious event information according to claim 1, wherein the generating traceability information corresponding to the malicious event sub-graph comprises:
selecting a vertex with a smallest in-degree in the malicious event sub-graph as a starting vertex, traversing the malicious event sub-graph in a depth-first manner, and determining a behavior event acquired in the traversal process as the traceability information.

5. The method for acquiring malicious event information according to claim 1, wherein the constructing an event heterogeneous graph based on the behavior data comprises:
classifying the behavior data into a corresponding time period, according to a time when a behavior occurs;
constructing a time-period event heterogeneous graph according to behavior data corresponding to each time period; and
combining time-period event heterogeneous graphs corresponding to all time periods to form the event heterogeneous graph.

6. The method for acquiring malicious event information according to claim 1, wherein the extracting behavior data in a terminal comprises:
extracting the behavior data in the terminal from a third-party log and an API log.

7. The method for acquiring malicious event information according to any one of claims 1 to 6, wherein the extracting a malicious event sub-graph from the event heterogeneous graph comprises:
extracting the malicious event sub-graph from the event heterogeneous graph according to a meta path template and a malicious event.

8. The method for acquiring malicious event information according to claim 7, wherein the extracting the malicious event sub-graph from the event heterogeneous graph according to a meta path template and a malicious event comprises:
based on an auxiliary edge addition rule, adding an edge of a behavior event corresponding to the auxiliary edge addition rule into the event heterogeneous graph, to form a final event heterogeneous graph; and
extracting the malicious event sub-graph from the final event heterogeneous graph according to the meta path template and the malicious event.

9. An apparatus for acquiring malicious event information, comprising:
a data extraction module, configured to extract behavior data in a terminal;
a heterogeneous graph generation module, configured to construct an event heterogeneous graph based on the behavior data, wherein an edge in the event heterogeneous graph represents a behavior event;
a malicious event sub-graph extraction module, configured to extract a malicious event sub-graph from the event heterogeneous graph; and
a traceability information generation module, configured to generate traceability information corresponding to the malicious event sub-graph.

10. An electronic device, comprising:
a memory, configured to store a computer program; and
a processor, configured to implement, when executing the computer program, the method for acquiring malicious event information according to any one of claims 1 to 8.

11. A storage medium, storing computer executable instructions, wherein the computer executable instructions, when being loaded and executed by a processor, implement the method for acquiring malicious event information according to any one of claims 1 to 8.
